# EUROPÄISCHE PATENTSCHRIFT

(11) **EP 2 025 991 B1**
(45) Veröffentlichungstag und Bekanntmachung des Hinweises auf die Patenterteilung: **21.10.2009**
(21) Anmeldenummer: 08104249.1
(22) Anmeldetag: 04.06.2008
(51) Int. Cl.: F16P 3/14, H04N 13/00, G01B 11/25

(54) **Vorrichtung und Verfahren zur dreidimensionalen Überwachung eines Raumbereichs mit mindestens zwei Bildsensoren**
Device and method for three-dimensional monitoring of a spatial area with at least two image sensors
Dispositif et procédé de surveillance tridimensionnelle d'un domaine spatial doté d'au moins deux capteurs d'images

(30) Priorität: 01.08.2007 DE 102007036129
(43) Veröffentlichungstag der Anmeldung: 18.02.2009
(73) Patentinhaber: SICK AG, 79183 Waldkirch (DE)
(72) Erfinder: Plasberg, Dr. Georg, 79353 Bahlingen (DE)
(74) Vertreter: Hehl, Ulrich

(56) Entgegenhaltungen:
- EP-A- 1 345 445
- EP-A- 1 598 792
- WO-A-20/07112076
- DE-A1- 10 310 768
- DE-A1-102005 056 265
- DE-B3-102006 001 634
- US-A1- 2002 125 435
- US-A1- 2007 131 850

## Beschreibung

Die Erfindung betrifft eine Vorrichtung und ein Verfahren zur dreidimensionalen Überwachung eines Raumbereichs nach den Oberbegriffen von Anspruch 1 beziehungsweise 9.

Zur visuellen Raumüberwachung können dreidimensionale Kamerasysteme eingesetzt werden, in denen eine Doppelkamera den Raumbereich aus zwei unterschiedlichen Perspektiven aufnimmt. Solche Sensoren können als Messsystem, aber auch in der Sicherheitstechnik zur Erkennung unerwünschten Eindringens oder zur Absicherung einer Gefahrenquelle eingesetzt werden. Zur stereoskopischen Auswertung der beiden von der Doppelkamera aufgenommenen Bilder sind zumindest zwei Verfahren bekannt, die Disparität zu bestimmen, also den scheinbaren Objektabstand durch die unterschiedliche Perspektive der beiden Kameras, wobei die Disparität durch eine einfache lineare Beziehung über die Brennweite und den Basisabstand der Kameras mit der Entfernung des Objektes zusammenhängt.

Nach dem ersten Verfahren wird eine Kreuzkorrelation der beiden Bilder berechnet, also letztlich die Bilder in der Achse der Verbindungslinie der beiden Kameras gegeneinander verschoben und ein Maß für den Grad an Übereinstimmung gebildet. Für die aufgenommenen Objekte zeigt die Kreuzkorrelation der Bilder bei einer bestimmten Verschiebung ein Maximum, welches der Disparität und somit dem Entfernungsmesswert entspricht. Alternativ können anstelle der Kreuzkorrelation Objekte in den einzelnen Bildern identifiziert werden, beispielsweise anhand ihrer Kanten, Farbe, ihrer Größe oder ähnlicher Merkmale und deren Disparität dann unmittelbar aus einem Vergleich der Positionen innerhalb der Bilder abgelesen werden.

Um die Robustheit zu erhöhen, also die Zuverlässigkeit der Objekt- und Entfernungsbestimmung, ist ein Verfahren bekannt, in welchem nicht nur die beiden gleichzeitig aufgenommenen Stereobilder nach einem der oben genannten Verfahren miteinander verglichen werden, sondern zunächst für jede der Kameras aus Bildsequenzen Bewegungsvektoren gebildet werden. Die Lage der Objekte wird also anhand ihrer vergangenen Lage beziehungsweise ihrer Bewegungsbahn bestimmt oder überprüft.

Die Disparität kann nicht oder nur sehr schwer geschätzt werden, wenn in dem Raumbereich unstrukturierte Oberflächen vorhanden sind. Deren mangelnder Kontrast erschwert die Identifikation und genaue Ortbestimmung bestimmter Bildbereiche in erheblichem Maße. Hierzu sind Verfahren bekannt, auf den Raumbereich und damit auch auf diese unstrukturierten Oberflächen Muster aufzuprojizieren. Die Strukturen dieser Muster können dann wie Objekte erkannt und somit die Abstandsinformationen der Objekte beispielsweise aus den Kanten der Muster ermittelt werden.

Aber auch die Auswertung kontraststärkerer Bilder nach Projizierung eines Beleuchtungsmusters allein genügt noch nicht, einen wirklich verlässlichen 3D-Sensor zu realisieren. Wenn beispielsweise die Remission an einer Objektoberfläche gering ist, kann auch das Beleuchtungsmuster nicht unbedingt für hinreichenden Kontrast sorgen. Je geringer der Kontrast wird, umso stärker sinkt die Verlässlichkeit der Schätzwerte.

Aus der EP 1 543 270 B1 ist ein stereoskopischer dreidimensionaler Kamerasensor zur Absicherung eines Gefahrenbereichs bekannt, welcher eine Szeneanalyse anhand mindestens zweier algorithmisch unterschiedlicher Verfahren durchführt, nämlich eine korrelationsbasierte und eine konturbasierte Szenenanalyse, die also der eingangs beschriebenen Kreuzkorrelation einerseits und der Objektanalyse andererseits entsprechen. Sofern eines dieser beiden gleichzeitig angewandten Verfahren eine Fremdobjektdetektion liefert, wird die Gefahrenquelle abgesichert. Nachteilig an dem herkömmlichen Verfahren ist, dass die Implementierung der beiden Algorithmen aufwändig ist und auch im Betrieb hohe Rechenkapazitäten fordert. Die Erhöhung der Sicherheit wird damit erkauft, dass die Verfügbarkeit des Gesamtsystems geringer ist. Wenn nämlich nur einer der Algorithmen einen Objekteingriff detektiert, ist die Wahrscheinlichkeit relativ hoch, dass es sich lediglich um einen Verfahrensfehler handelt. Das System schließt also zuverlässiger aus, dass ein Objekteingriff unentdeckt bleibt, ist aber dafür anfällig für Fehlalarme.

Aus der DE 10 2006 001 634 B3 ist ein Verfahren zur Erstellung eines Abstandsbildes aus der Korrespondenz von Pixeln der Bilder zweier Kameras in Stereo-Anordnung bekannt, bei dem je ein Bildpaar unter Beleuchtung mit einem ersten und einem zweiten zufälligen Beleuchtungsmuster aufgenommen wird. Anschließend wird pixelweise der Quotient zwischen den Bildpaaren unter den verschiedenen Beleuchtungsbedingungen gebildet und aus den so erhaltenen Helligkeitsverhältnissen ein Abstandsbild berechnet.

Die EP 1 598 792 A1 offenbart ein Infrarot-Sicherheitssystem mit einer Beleuchtung zum Projizieren eines Musters, bei dem in einer Ausführungsform mit mehreren Kameras ein dreidimensionales Bild des Überwachungsbereichs gewonnen wird. Um Eingriffe in den Überwachungsbereich zu erkennen, wird das ungestörte Bild mit dem gestörten Bild verglichen, beispielsweise durch Subtraktion des Referenzbildes von dem aktuellen Bild.

Aus der WO2005/010825 A2 ist eine dreidimensionale Oberflächenrekonstruktion bekannt, die auf der Auswertung von Verzerrungen eines regelmäßigen Linienmusters durch die zu erkennende Oberfläche beruht. In einem ersten Schritt wird vorab ein selbstunähnliches Muster projiziert und von zwei Kameras aufgenommen. Aufgrund der Selbstunähnlichkeit des Musters kann dann eine Translationsmatrix berechnet werden, welche Bereiche im Bild der einen Kamera Bereichen im Bild der anderen Kamera zuordnet. Diese Translationsmatrix wird dann in einem zweiten Schritt verwendet, um bei Projektion des Linienmusters die Linien in von beiden Kameras aufgenommenen Bildern miteinander zu identifizieren.

Somit ist Aufgabe der Erfindung, einen dreidimensionalen Sensor zu schaffen, welcher Entfernungswerte mit hoher Zuverlässigkeit bestimmt.

Diese Aufgabe wird durch eine Vorrichtung gemäß Anspruch 1 gelöst. Demnach ist erfindungsgemäß eine Vorrichtung zur Überwachung eines Raumbereichs mit mindestens zwei Bildsensoren und einer angeschlossenen Steuerung vorgesehen, welche dafür ausgebildet ist, mittels der Bildsensoren ein erstes Bildpaar aufzunehmen und zu einem dreidimensionalen ersten Einzel-Entfernungsbild des Raumbereichs zu verrechnen. Die Vorrichtung weist eine Dynamisierungseinrichtung auf, welche die Aufnahmebedingungen des Raumbereichs und/oder der Bildsensoren verändern kann, wobei die Steuerung dafür ausgebildet ist, mittels der Bildsensoren ein erstes Bildpaar und bei gegenüber dem ersten Bildpaar durch die Dynamisierungseinrichtung veränderten Aufnahmebedingungen ein zweites Bildpaar aufzunehmen. Die Steuerung ist weiterhin dafür ausgebildet, das erste Bildpaar zu einem dreidimensionalen ersten Einzel-Entfernungsbild und das zweite Bildpaar zu einem dreidimensionalen zweiten Einzel-Entfernungsbild des Raumbereichs zu verrechnen und aus dem ersten EinzelEntfernungsbild und dem zweiten Einzel-Entfernungsbild ein dreidimensionales Abbild des Raumbereichs als Gesamt-Entfernungsbild zu ermitteln. Die Aufgabe wird auch durch ein entsprechendes Verfahren gemäß Anspruch 9 gelöst.

Das zur eigentlichen Auswertung herangezogene Gesamt-Entfernungsbild enthält Informationen aus zwei verschiedenen Quellen, nämlich Bildpaaren, die unter unterschiedlichen Aufnahmebedingungen aufgenommen sind. Die Wahrscheinlichkeit, dass ein Merkmal beispielsweise wegen mangelndem Kontrast unter beiden Aufnahmebedingungen nicht erkannt wird, ist wesentlich verringert. Somit sind die ermittelten Entfernungswerte deutlich zuverlässiger. Gleichzeitig ist die Verfügbarkeit des Systems erhöht, weil eine Fehlmessung unter nur einer der beiden Aufnahmebedingungen durch die andere kompensiert werden kann. Die rechenintensive Auswertung des Gesamt-Entfernungsbilds, je nach Anwendung beispielsweise eine Objektverfolgung, -überwachung oder -detektion, muss nur einmal vorgenommen werden, nicht in jedem Einzel-Entfernungsbild.

Vorteilhafterweise ist die Dynamisierungseinrichtung eine Beleuchtungseinrichtung, insbesondere zur Ausleuchtung des Raumbereichs mit einem selbstunähnlichen oder einem regelmäßigen Muster, oder eine Bewegungseinrichtung zur Veränderung der Positionen oder des Basisabstands der Bildsensoren. Die Beleuchtung dient im einfachsten Fall einer erhöhten Helligkeit, aber auch einem erhöhten Kontrast, sofern sie ein Muster enthält. Ist dieses Muster regelmäßig, so kann es einfach erzeugt und ausgewertet werden und sorgt für genügend Merkmale, nämlich des Musters, die für die Disparitätsschätzung verwendet werden können. Ein selbstunähnliches Muster sorgt darüber hinaus dafür, dass die Bildbereiche anhand des Musters eineindeutig zugeordnet werden können. Mit diesen Maßnahmen enthalten schon die Einzel-Entfernungsbilder, also noch vor der Verrechnung zu dem Gesamt-Entfernungsbild, wesentlich präzisere Entfernungsinformationen.

Eine Veränderung des Basisabstands der Bildsensoren und/oder von deren gemeinsamer Position variiert weitere Parameter, die für die Entfernungsbestimmung aus der Disparitätsschätzung maßgeblich sind, oder sorgt für eine neue Perspektive. Dadurch wird jeweils ermöglicht, nach der Veränderung in dem zweiten Einzel-Entfernungsbild die Disparität von Objekten schätzen zu können, die im ersten Einzel-Entfernungsbild nicht hinreichend erkennbar waren, oder umgekehrt. Die Bewegungseinrichtung kann in einer mobilen Anwendung der Antrieb des Fahrzeugs, Roboters oder dergleichen sein, an dem die Vorrichtung angebracht ist, aber auch ein eigens für die erfindungsgemäß verbesserte Auswertung vorgesehene Bewegungseinrichtung, wie ein beweglicher Arm oder ein Mikromechanismus zur Bewegung des Aufnahmechips.

Bevorzugt ist die Steuerung dafür ausgebildet, aus dem ersten und dem zweiten Bildpaar ein Differenz-Bildpaar und aus dem Differenz-Bildpaar insbesondere mittels Bestimmung von Differenzvektoren ein drittes Einzel-Entfernungsbild zu erzeugen und das Gesamt-Entfernungsbild unter Einbeziehung des dritten Einzel-Entfernungsbilds zu ermitteln. Die Dynamisierungseinrichtung sorgt für Unterschiede zwischen dem ersten und dem zweiten Bildpaar, welche ganz analog ausgewertet werden können, wie eine Bewegung der Objekte im Raumbereich innerhalb einer Bildsequenz. Durch eine Verfolgung dieser Bewegung, beispielsweise über Differenzvektoren, kann ein von der Disparitätsschätzung im ersten und zweiten Einzel-Entfernungsbild unabhängiges Verfahren die Entfernungswerte erneut schätzen. Die gegenseitige Kompensation wird damit eine dreifache, so dass die Genauigkeit der Entfernungswerte im Gesamt-Entfernungsbild noch einmal erhöht wird. Dabei sind die Differenzvektoren, auch wenn deren Dynamik nicht notwendig aus einer Bewegung entsteht, analog aufzufassen, wie die Bewegungsvektoren in den einleitend beschriebenen Verfahren.

In einer bevorzugten Weiterbildung ist die Steuerung dafür ausgebildet, bei der Verrechnung eines Bildpaares zu einem Einzel-Entfernungsbild ein Verlässlichkeitsmaß für die Entfernungen zu berechnen und das Gesamt-Entfernungsbild als mit dem Verlässlichkeitsmaß gewichtetes Mittel der Einzel-Entfernungsbilder zu ermitteln. Sowohl bei der Disparitätsschätzung als auch bei einer Bewegungsverfolgung können die Algorithmen erkennen, ob die Bedingungen für eine gute Entfernungsberechnung gegeben sind, beispielsweise ob das Bild oder Bildbereiche dunkel oder kontrastarm sind. Wird die Disparität über eine Kreuzkorrelation geschätzt, so kann die Korrelation bereits selber das Verlässlichkeitsmaß darstellen und die Güte der Objekterkennung beispielsweise an der Ausprägung und Schärfe der Maxima gemessen werden, an denen die Objekte erkannt werden. Sind die Entfernungen im Gesamt-Entfernungsbild mit derartigen Verlässlichkeitsmaßen gemittelt, so tragen gute Schätzwerte stärker bei als schlechte Schätzwerte und erhöhen damit in erheblichem Maße die Verlässlichkeit des Gesamtresultats. Dabei kann sich der Gewichtungsfaktor, also das Verlässlichkeitsmaß, in verschiedenen Ausführungsformen und in verschiedenen Situationen sowohl auf einzelne Bildpunkte, auf Bildbereiche wie auf das Bild als Ganzes beziehen.

Vorteilhafterweise ist die Steuerung dafür ausgebildet, jedes Bildpaar jeweils mit dem gleichen Stereoskopiealgorithmus zu dem dreidimensionalen Einzel-Entfernungsbild zu verrechnen. Dann muss nämlich in der Steuerung nur ein einziger Algorithmus implementiert sein, was Entwicklung, Test und letztlich auch den apparativen Aufwand verringert.

In einer weiteren bevorzugten Ausführungsform ist eine Warn- oder Absicherungseinrichtung vorgesehen und die Steuerung dafür ausgebildet, bei Erkennen eines unzulässigen Objekteingriffs oder bei Unterschreiten eines Gesamt-Verlässlichkeitswerts des Gesamt-Entfernungsbilds als Ganzes oder Bereichen davon mittels der Warn- oder Absicherungseinrichtung eine Warnung auszugeben oder eine Gefahrenquelle abzusichern. Damit ist die Vorrichtung für sicherheitstechnische Anwendungen geeignet, indem sie unzulässige Objekteingriffe insbesondere von Körperteilen der Bedienpersonen erkennt und sich auch gleichzeitig selber testet, indem sie Situationen erkennt, in denen die Erkennungsrate zu schlecht ist. Die abgestufte Reaktion durch zunächst eine Warnung bei Annäherung und eine Absicherung erst bei Verletzung eines hochkritischen Bereichs sorgt für eine höhere Verfügbarkeit. So können in dem Raumbereich Warnfelder definiert werden, die noch in einigem Abstand zu der Gefahrenzone liegen und eigentliche Schutzfelder in unmittelbarer Nähe der Gefahrenquelle. Ein unzulässiger Objekteingriff muss aber nicht statisch durch Verletzung von bestimmten Bereichen definiert sein, es können auch weitere Faktoren einfließen, wie etwa die Bewegungsgeschwindigkeit, die Bewegungsrichtung oder dergleichen. Darüber hinaus kann es auch erlaubte Objekte geben, beispielsweise einen Roboterarm, welcher wegen seiner vordefinierten Bewegung oder höherer Unempfindlichkeit möglicherweise wesentlich näher an Gefahrenquellen herantreten darf als Bedienpersonal.

Besonders bevorzugt beträgt der Gesamt-Verlässlichkeitswert Null bei Überschreitung eines vorgegebenen Mindestwerts der Abweichung von Entfernungen in verschiedenen Einzel-Entfernungsbildern untereinander. In einer solchen Situation liegt es nahe anzunehmen, dass unter einer der beiden Aufnahmebedingungen überhaupt keine vernünftige Entfernungsbestimmung möglich war. Dann würden die Entfernungen im Gesamt-Entfernungsbild nur noch von einer einzigen Auswertung abhängen und sind folglich nicht vollständig verlässlich.

Vorteilhafterweise ist die Steuerung dafür ausgebildet, die Einzel-Entfernungsbilder und/oder das Gesamt-Entfernungsbild mittels eines räumlichen Filters zu glätten oder die Warn- oder Absicherungseinrichtung nur dann zu aktivieren, wenn das Erkennen eines unzulässigen Objekteingriffs oder die Unterschreitung des Gesamt-Verlässlichkeitswert länger andauert als eine vorgegebene Mindestzeit. Eine solche räumliche und zeitliche Glättung vermeidet Fehldetektionen durch einzelne Ausreißer. Selbstverständlich muss der Filter fein genug bleiben, um die Anforderungen an die räumliche und zeitliche Auflösung des Sensors zu erhalten. So muss beispielsweise die Mindestzeit auf die maximal mögliche Annäherung an eine Gefahrenquelle angepasst sein, so dass eine Absicherung immer rechtzeitig erfolgen kann.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische dreidimensionale Darstellung einer Ausführungsform der Erfindung und des überwachten Raumbereichs; und
- Fig. 2: ein Ablaufdiagramm einer Ausführungsform des erfindungsgemäßen Verfahrens zur dreidimensionalen Überwachung eines Raumbereichs.

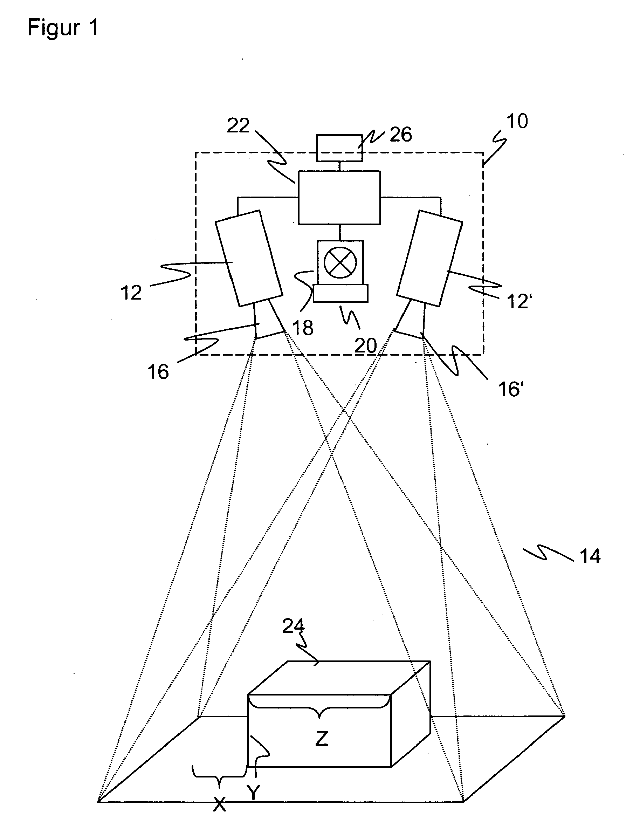

Figur 1 zeigt in einer schematischen dreidimensionalen Darstellung den Aufbau einer Ausführungsform des erfindungsgemäßen Sensors 10. Zwei Kameramodule beziehungsweise Bildsensoren 12, 12' sind in einem bekannten Abstand zueinander montiert. Beide Kameras 12, 12' nehmen jeweils das Bild eines Raumbereichs beziehungsweise Überwachungsbereichs 14 auf. Die Kameras 12, 12' weisen ein nur angedeutetes Objektiv 16, 16' mit einer abbildenden Optik auf. Der Sichtwinkel dieser Optik ist in Figur 1 durch gestrichelte Linien dargestellt, die jeweils eine Sichtpyramide bilden, und beträgt erfindungsgemäß beispielsweise 45°. In jeder Kamera 12, 12' ist ein nicht dargestellter eigentlicher Bildsensor vorgesehen. Dieser Bildsensor ist ein matrixförmiger Aufnahmechip, der ein beispielsweise rechteckiges Pixelbild aufnimmt und kann beispielsweise ein CCD- oder ein CMOS-Sensor sein.

In der Mitte zwischen den beiden Kameras 12, 12' ist eine Beleuchtungsquelle 18 angeordnet. Diese Lage in der Mitte ist wegen der gleichen Perspektive bezüglich der Beleuchtung für die beiden Kameras 12, 12' vorteilhaft, kann aber in anderen Ausführungsformen auch variiert werden. Als Lichtquelle für die Beleuchtungsquelle 18 dient ein Laser mit einer Leistung zwischen 20 und 100 mW. Die Laserleistung kann auch 1 W oder noch mehr betragen, sofern die Schutzklasse dies zulässt und die höheren Kosten in Kauf genommen werden. Alternativ ist auch der Einsatz einer oder mehrerer LEDs oder einer anderen Beleuchtung vorstellbar.

Der Beleuchtungsquelle 18 ist in der optischen Achse ein diffraktives optisches Element 20 nachgeordnet, um in dem Überwachungsbereich 14 ein Beleuchtungsmuster zu erzeugen. Die Beleuchtungsquelle 18 erzeugt Licht einer vorgegebenen und bekannten Wellenlänge, die im sichtbaren, ultravioletten oder infraroten Bereich liegen kann. Selektiv für diese Wellenlänge lenkt das diffraktive optische Element 20 das von der Beleuchtungsquelle 18 einfallende Licht nur in bestimmte Bereiche des Überwachungsbereichs 14 ab. Die in der Figur nicht dargestellten Lichtbündel 22 erzeugen ebenfalls jeweils einen Punkt, eine Linie oder dergleichen. Das entstehende Beleuchtungsmuster in dieser Ausführungsform ist ein regelmäßiges, also beispielsweise ein matrixförmig angeordnetes Punkt- beziehungsweise Kreismuster. Alternativen mit Gittermustern oder sonst denkbaren regelmäßigen Mustern sind möglich.

Statt eines regelmäßigen Musters kann auch mit einem selbstunähnlichen Muster beleuchtet werden. Damit ist ein solches Muster gemeint, dessen Strukturen sich bei einfachen geometrischen Operationen wie Verschiebungen, Drehungen, Spiegelungen, Streckungen oder dergleichen nicht wiederholen. Im Abbild des Musters steckt also unabhängig von der Oberfläche, auf die es projiziert wird, noch die Information, um welche Teilstelle des ursprünglichen Musters es sich handelt und dessen Ort in einem beispielsweise rechteckigen Referenzsystem ist bekannt. Damit können einander entsprechende Merkmale in den beiden Bildern der Kameras 12, 12' wesentlich leichter zugeordnet werden.

Mit einem anderen diffraktiven optischen Element 20 können auch andere Beleuchtungsmuster erzeugt werden. Dabei ist jedes beliebige Muster erzeugbar, für die Auswertung hilfreich und kontraststark ist ein Kreismuster, ein Linienmuster, ein Schachbrettmuster oder ein Gitter. Prinzipiell kann statt eines diffraktiven optischen Elements 20 auch eine Maske verwendet werden. Dies ist aber weniger vorteilhaft, da ein Teil der eingestreuten Lichtenergie in der Maske verloren geht.

Der Laser der Beleuchtungsquelle 18 erzeugt beispielsweise Pulse einer Länge von 1-10 ms. Das Muster im Überwachungsbereich 14, das durch das diffraktive optische Element 20 erzeugt wird, kann etwa eine Leistung von 0,1 mW je Punkt haben. Je nach Leistung des Lasers sollte daher eine Höchstzahl an Punkten nicht überschritten werden, um hinreichenden Kontrast zu erhalten.

In einer Ausführungsform der Erfindung ist als Beleuchtungsquelle 18 ein Laserstack vorgesehen. Der Laserstack erzeugt mehrere auf einer Linie liegende Lichtstrahlen. Jeder dieser Lichtstrahlen kann anschließend durch ein diffraktives optisches Element 20 oder durch eine Vielzahl von nebeneinander liegenden diffraktiven optischen Elementen 20 zu dem Beleuchtungsmuster geformt werden. Somit entsteht das Muster in zwei Stufen: der Laserstack zieht die Beleuchtung in einer ersten Achse auseinander, das diffraktive optische Element 20 formt aus dieser Beleuchtung in der ersten Achse in einer zweiten, im Wesentlichen zu der ersten Achse senkrechten Achse, jeweils einen Streifen des gewünschten Beleuchtungsmusters.

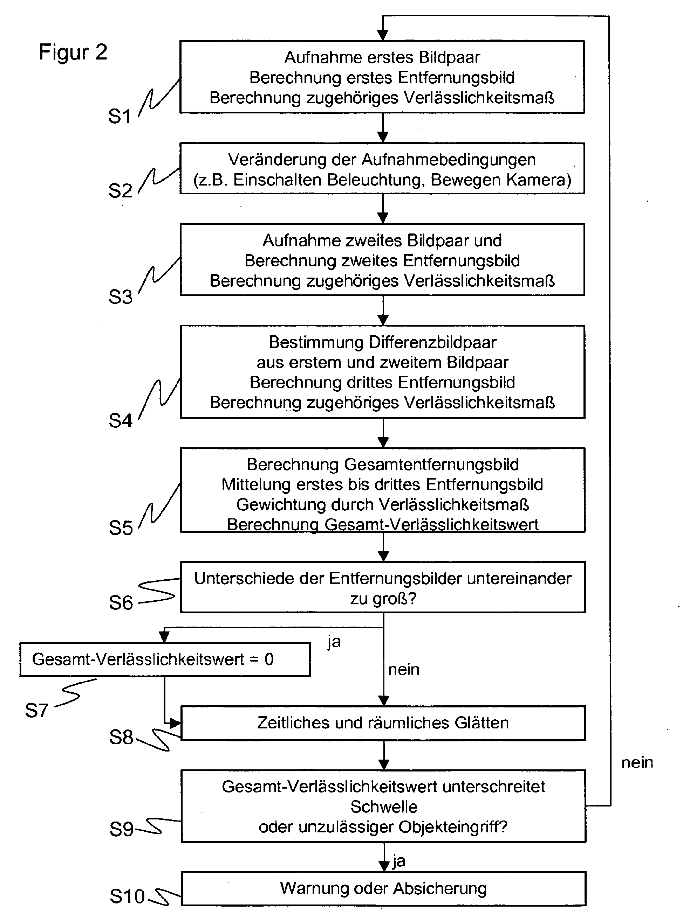

Mit den beiden Kameras 12, 12' und der Beleuchtungsquelle 18 ist eine Steuerung 22 verbunden. Die Steuerung 22 steuert die Beleuchtungsquelle 18 und empfängt Bildsignale von den beiden Kameras 12, 12'. Das Auswertungsverfahren in der Steuerung 22 wird weiter unten im Zusammenhang mit Figur 2 beschrieben. Eine besondere Form der beweglichen Anordnung ist der mobile Einsatz, beispielsweise an einem Fahrzeug oder einem Roboter. Dann wird nicht eine Bewegung zum Zwecke der besseren Überwachung durch den Sensor 10 vollzogen, sondern die durch Bewegung ohnehin vorhandene Dynamik vorteilhaft für den Sensor 10 ausgenutzt. Dazu kann ein Positionsbestimmungssystem vorgesehen sein wie ein Weggeber, ein GPS-Empfänger oder dergleichen und die Eigenbewegung kann bei der Auswertung der Bilder herausgerechnet werden.

Die beiden Kameras 12, 12' können beweglich montiert sein und zwar einerseits zur Veränderung des Basisabstands der beiden Kameras 12, 12' untereinander, andererseits aber auch zur Veränderung der gemeinsamen Position. Diese Positions- und Basisabstandsänderungen kann ebenfalls die Steuerung 22 mittels nicht dargestellter Motoren oder dergleichen vornehmen und somit Bilder aus verschiedenen Perspektiven und mit variierendem Basisabstand aufnehmen.

Ebenfalls ohne Darstellung kann in einer weiteren Ausführungsform eine dritte Kamera vorgesehen sein, welche mit den beiden Kameras 12, 12' in einer "L"-Konfiguration angeordnet ist. Damit wird eine weitere Basislinie senkrecht zu derjenigen der beiden Kameras 12, 12' eingeführt, die in manchen Situationen Disparitätsschätzungen ermöglicht, welche mit nur einer Basislinie nicht möglich wären. Das Bild der dritten Kamera kann bei der stereoskopischen Auswertung entweder unter Bildung von Paaren von Kameras oder auch mittels Auswertung eines Bildtripels berücksichtigt werden.

Ein zu erfassendes Objekt 24 ist in Figur 1 vereinfacht als Quader dargestellt. Die Erfassung des Objekts 24 durch den Sensor 10 erfolgt durch Verrechnung der beiden Einzelbilder der Kameras 12, 12' mithilfe einer Disparitätsschätzung zu einem stereoskopischen dreidimensionalen Bild. Derartige stereoskopische Bildgebungsverfahren sind von den beiden menschlichen Augen inspiriert und seit Längerem bekannt. Dafür wird die scheinbare durch die unterschiedliche Perspektive der beiden Kameras 12, 12' entstandene Verschiebung von Bildmerkmalen in den beiden Bildern (Parallaxe) mit dem bekannten Abstand der beiden Kameras 12, 12' untereinander zu einer Entfernungsschätzung des Bildmerkmals verrechnet. Man kann statistische Maße für die Übereinstimmung der den Bildmerkmalen entsprechenden Bildausschnitte definieren und damit ein Verlässlichkeitsmaß für die Disparitätsschätzung erhalten - ein Beispiel hierfür ist die Kreuzkorrelation.

Mit der Steuerung 22 ist ein Schaltausgang 26 verbunden, der selbst Steuerungselemente wie einen Mikroprozessor aufweisen kann. Über diesen Schaltausgang 26 kann die Steuerung 22 ein Warnsignal ausgeben, wenn ein unzulässiges Objekt 24, ein unzulässiges Bewegungsmuster des Objekts 24, eine unzulässige Position des Objekts 24 oder dergleichen erkannt wird. Damit können je nach Anwendung Eindringlinge erkannt, Messwerte übertragen, Qualitätssicherungsdaten aufgenommen oder Schutzmaßnahmen vorbereitet werden. Als weitere Maßnahme über ein Warnsignal hinaus kann der Schaltausgang 26 eine Gefahrenquelle absichern, beispielsweise die Bewegung einer Presse stoppen oder ein gefährliches Werkzeug in eine Ruheposition bringen, wenn die Steuerung 22 eine Gefährdung für Bedienpersonal, aber auch für Werkzeuge und insbesondere Roboter erkennt. Dabei sorgt die zweistufige Absicherung zunächst durch ein Warnsignal für eine höhere Verfügbarkeit, weil vor dem Abschalten der gefährdenden Maschine zunächst auf das Warnsignal hin der unzulässige Objekteingriff möglicherweise noch rechtzeitig beendet werden kann.

Unter Bezugnahme auf die Figur 2 wird im Folgenden eine Ausführungsform des erfindungsgemäßen Überwachungsverfahrens mittels des Sensors 10 beschrieben. In einem ersten Schritt S1 veranlasst die Steuerung 22 die beiden Kameras 12, 12' zur Aufnahme je eines Bildes des Überwachungsbereichs 14. Aus diesem Bildpaar ermittelt die Steuerung 22 beispielsweise durch eine Disparitätsschätzung mittels Kreuzkorrelation oder mittels eines objektbasierten Verfahrens ein erstes Entfernungsbild. Das Bildbearbeitungsverfahren, mit denen das erste Entfernungsbild aus dem Bildpaar berechnet wird, liefert zudem ein zugehöriges Verlässlichkeitsmaß für die somit bestimmten Entfernungen. Im Falle der Kreuzkorrelation kann dieses Verlässlichkeitsmaß bereits immanenter Bestandteil des Bildbearbeitungsverfahrens sein. Aber auch andere Bildbearbeitungsverfahren liefern ein Verlässlichkeitsmaß mit oder erlauben die Definition eines solchen. In das Verlässlichkeitsmaß kann auch die aktuelle Aufnahmesituation einfließen, beispielsweise die Helligkeit oder der Kontrast.

In einem zweiten Schritt S2 werden die Aufnahmebedingungen mittels der in Figur 1 als Beleuchtung ausgebildeten Dynamisierungseinrichtung 18 durch eine Ansteuerung der Steuerung 22 verändert. Dabei kann die Beleuchtung 18 ein- oder ausgeschaltet oder in ihrer Helligkeit variiert werden, ein anderes Muster eingestrahlt werden, die Farbe verändert werden, aber auch der Basisabstand zwischen den Kameras 12, 12' oder deren Position verändert werden, insbesondere durch Bewegung in einer mobilen Anwendung.

Analog dem ersten Schritt S1 wird in einem darauf folgenden dritten Schritt S3 unter den veränderten Aufnahmebedingungen mit jeder Kamera 12, 12' je ein weiteres Bild aufgenommen und aus dem Bildpaar ein zweites Entfernungsbild mit einem zugehörigen Verlässlichkeitsmaß berechnet. Die Entfernungsdaten können sich verändert haben, weil Entfernungen besser oder schlechter erkannt werden. Sofern die Kameras 12, 12' bewegt wurden, ist die aus der Bewegung resultierende Entfernungsänderung von der Steuerung 22 herauszurechnen. Zur Verrechnung der Bildpaare zu einem dreidimensionalen Entfernungsbild können in den Schritten S1 und S3 unterschiedliche oder identische stereoskopische Algorithmen verwendet werden. Die Verwendung eines identischen stereoskopischen Algorithmus' hat den Vorteil, dass in der Steuerung 22 nur ein solcher Algorithmus implementiert und getestet werden muss.

Sofern das erste oder das zweite Entfernungsbild aus einem bei abgeschalteter Beleuchtung 18 aufgenommenen Bildpaar berechnet wird, liefert es insbesondere zuverlässige Ergebnisse in Regionen hohen Kontrastes, wie an den Ecken von Gegenständen oder an Schattenkanten. An regelmäßigen Strukturen ergeben sich jedoch auch Zweideutigkeiten. Ein bei eingeschalteter Beleuchtung 18 aufgenommenes Bild verleiht auch unstrukturierten Oberflächen eine künstliche Struktur durch das Beleuchtungsmuster. Einschränkungen gibt es dagegen in der Reichweite, weil mit zunehmendem Abstand die Beleuchtungsintensitäten abnehmen. Sofern das Beleuchtungsmuster regelmäßig ist, können sich auch hier Zweideutigkeiten ergeben. Dies kann durch ein selbstunähnliches Beleuchtungsmuster vermieden werden.

In einem vierten Schritt S4 bildet die Steuerung 22 ein Differenzbildpaar durch Subtraktion des ersten Bildpaares von dem zweiten Bildpaar. Auch auf dieses Differenzbildpaar wendet die Steuerung 22 einen Algorithmus zur Ermittlung eines dreidimensionalen an, nunmehr des dritten Entfernungsbilds. Durch die Dynamisierungseinrichtung ist ein gezielter Unterschied zwischen dem ersten Bildpaar und dem zweiten Bildpaar erzeugt worden. Genau dieser Unterschied ist in dem Differenzbildpaar repräsentiert. Dabei kann die Subtraktion gegebenenfalls auch erst nach einer Vorverarbeitung der Einzelbilder erfolgen, etwa einer Glättung oder dergleichen. Die Verarbeitung zu einem Entfernungsbild kann mittels eines der stereoskopischen Verfahren erfolgen, wie bei dem ersten und dem zweiten Bildpaar.

Da das Referenzbild gerade nur den dynamischen Unterschied zwischen diesen beiden Bildpaaren enthält, kann aber bevorzugt stattdessen das in der Einleitung beschriebene Verfahren mit Bewegungsvektoren angewandt werden. Jedes Differenzbild stellt gerade dynamische Unterschiede dar, die aber im Gegensatz zu der klassischen Bewegungsvektoranalyse nicht der Objektbewegung selbst geschuldet ist, sondern entweder der veränderten Beleuchtung oder der Bewegung der Kameras 12, 12'. Um die Anwendbarkeit der bekannten auf Bewegungsvektoren basierenden Auswertungsverfahren zu unterstreichen, werden in der gesamten Erläuterung der Erfindung die Begriffe Differenzvektor und Bewegungsvektor weitgehend gleichbedeutend verwendet.

Diese Art der Verrechnung zu einem Entfernungsbild hat den Vorteil, dass bei hellen Objekten und größeren Abständen die Beleuchtung und die Messergebnisse aufgrund der Korrelation der Beleuchtungsmuster nicht in hohen Allgemeinkontrasten der Szene in dem Raumbereich 14 untergehen. Auch zu dem dritten Entfernungsbild wird ein zugehöriges Verlässlichkeitsmaß von der Steuerung 22 berechnet.

Durch die Berechnung von erstem, zweitem und drittem Entfernungsbild in der Steuerung 22 für jeden Bildpunkt liegt aus drei unterschiedlichen Verfahren ein Entfernungsschätzwert und ein Vertrauensgrad für diesen Entfernungsschätzwert vor. In einem weiteren Schritt S5 wird aus diesen drei Entfernungsschätzwerten ein mit dem jeweiligen Vertrauensgrad gewichteter Mittelwert für die Entfernung als Gesamt-Entfernungsbild berechnet. Dieses Gesamt-Entfernungsbild ist also ein dreidimensionales Abbild des Raumbereichs 14, dessen Entfernungen auf einer Schätzung aus drei unterschiedlichen Verfahren beruhen, wobei besonders zuverlässige Schätzungen mit einem höheren Gewicht eingegangen sind. Daher sind die Entfernungswerte des Gesamt-Entfernungsbilds genauer als die jedes einzelnen Verfahrens. Statt das Gesamt-Entfernungsbild jeweils aus einzelnen Bildpunkten zu berechnen, ist es möglich, Bildbereiche zusammenzufassen und auch jeweils für die Bildbereiche und die Gewichtung nur einem gemeinsamen Vertrauensfaktor anzusetzen. Schließlich ist denkbar, bei der Berechnung des Gesamt-Entfernungsbilds statt der hier beschriebenen drei Verfahren nur zwei dieser Verfahren einfließen zu lassen, wobei das nicht berücksichtigte Verfahren dann aus ökonomischen Gründen auch gar nicht erst zu einem Einzel-Entfernungsbild ausgewertet werden sollte.

Schließlich wird noch bei der Bildung des Gesamt-Entfernungsbilds auch ein Gesamt-Verlässlichkeitswert errechnet, welcher angibt, wie gut dessen Entfernungsdaten den Raumbereich 14 wiedergeben. Dieser Gesamt-Verlässlichkeitswert kann für jeden Bildpunkt, für Bildbereiche oder für das Gesamt-Entfernungsbild als Ganzes berechnet sein.

Die Stärken und Schwächen der somit beschriebenen Einzel-Auswertungsverfahren gemäß der Schritte S1, S3 und S4 können anhand einer beispielhaften Kontur in der Figur 1 nachvollzogen werden. Dort ist mit X eine Oberfläche außerhalb des Objekts 24, mit Z die Oberfläche des Objekts 24 und mit Y die Kante im Übergang zwischen dem Bereich X und Z bezeichnet.

Ein Bildpaar, das ohne Beleuchtung aufgenommen wird, wird an der kontrastreichen Kante Y einen guten Schätzwert liefern, nicht jedoch in den unstrukturierten Bereichen X und Z. Ein Bildpaar, das mit strukturierter Beleuchtung aufgenommen wird, liefert in allen Bereichen X, Y und Z Schätzwerte, aber der Vertrauensgrad oder das Verlässlichkeitsmaß wird stark von den Helligkeiten der Bereiche X und Z und dem Umgebungslicht sowie von dem Abstand des Objekts 24 zum Sensor 10 abhängen. Bei einer Beleuchtung mit einem regelmäßigen Muster können Objektstrukturen in Strukturen des Beleuchtungsmusters untergehen und so übersehen werden; die Kante Y würde dann bei unbeleuchtetem Raumbereich 14 besser erkannt.

In dem soeben diskutierten Beispiel wird also das erste Bildpaar in Schritt S1 ohne Beleuchtung aufgenommen, während die Dynamisierung darin besteht, für das zweite Bildpaar in Schritt S2 die Beleuchtung 18 einzuschalten und ein strukturiertes Muster in den Raumbereich 14 zu projizieren. Analoge Beispiele ließen sich auch für die anderen Dynamisierungen anführen, also beispielsweise eine Variation der Beleuchtung oder eine Bewegung der Kameras 12, 12'.

Das dritte Entfernungsbild, das mittels Bewegungsvektoren aus einem Differenzbildpaar erzeugt ist, liefert in den Bereichen X und Z mit einer gegenüber dem zweiten Entfernungsbild verminderten, gegenüber dem ersten Entfernungsbild dagegen gesteigerten Empfindlichkeit gegen Grundhelligkeit und Umgebungslicht Schätzwerte, ist jedoch blind oder nahezu blind gegenüber der Kante Y, da diese durch Subtraktion wegfällt. Dadurch, dass die Objektverfolgung mittels Bewegungsvektoren grundsätzlich anders arbeitet als die Disparitätsschätzung gemäß der Schritte S1 und S3, wird aber das dritte Entfernungsbild zumindest in Teilbereichen verlässlichere Entfernungen liefern als die beiden anderen Verfahren.

Das Verlässlichkeitsmaß wird in dem angegebenen Beispiel dazu führen, im Bereich X/Z Schätzwerte des zweiten und dritten Entfernungsbilds zu verwenden, im Bereich Y dagegen nur Schätzwerte des ersten und zweiten Entfernungsbilds. Indem auf diese Weise unzuverlässige Entfernungswerte ausgeschlossen und zuverlässige Entfernungswerte höher gewichtet werden, sind die Entfernungen in dem Gesamt-Entfernungsbild verlässlicher und genauer als die Entfernungswerte jedes Einzelverfahrens.

In einem sechsten Schritt S6 wird noch eine Plausibilitätsüberprüfung vorgenommen, ob nämlich die Unterschiede gleicher Objekte in den verschiedenen Entfernungsbildern untereinander zu groß sind. Dann nämlich kann es sein, dass die Disparitätsschätzung gescheitert ist und zufällige Werte angenommen hat. Auch eine gewichtete Mittelung solcher bedeutungslosen Einzelwerte führt zu keiner sinnvollen Messung der Entfernung. Daher wird bei Überschreitungen eines tolerierbaren Entfernungsunterschiedes der Gesamt-Verlässlichkeitswert in einem Schritt S7 gleich Null gesetzt.

In einem anschließenden Schritt S8 wird das Gesamt-Entfernungsbild mit räumlichen und zeitlichen Filtern bearbeitet. Die räumliche Filterung führt zu einer Glättung und kann alternativ oder zusätzlich auch schon auf den Bilddaten oder dem ersten, zweiten und dritten Entfernungsbild vorgenommen werden. Auf diese Weise kann in dem Gesamt-Entfernungsbild ein einzelner Ausreißer akzeptiert werden, wenn die benachbarten Punkte den gleichen Wert haben. In ähnlicher Weise kann eine zeitliche Glättung vorgenommen werden, so dass Entfernungsdaten und Verlässlichkeitsmaße nur dann zu einem Ausgangssignal am Schaltausgang 26 führen, wenn sie eine gewisse Mindestzeit vorlegen. Diese Mindestzeit muss klein genug sein, dass eine Gefährdung ausgeschlossen ist, weil innerhalb dieser Mindestzeit bei realistischen Geschwindigkeiten keine Gefahr droht.

Zum Selbsttest, besonders wichtig in einer sicherheitstechnischen Anwendung, wird in einem weiteren Schritt S9 überprüft, ob der Gesamt-Verlässlichkeitswert eine Schwelle unterschreitet, denn in diesem Fall ist anzunehmen, dass die Entfernungsdaten im Gesamt-Entfernungsbild keine zuverlässige Auswertung ermöglichen. Sofern der Gesamt-Verlässlichkeitswert im Schritt S5 für Teilbereiche oder einzelne Entfernungen ausgewertet wurde, kann statt einer pauschalen Beurteilung des gesamten Raumbereichs auch die Überwachung nur für Teilbereiche oder einzelne Entfernungsdaten getestet werden. Weiterhin wird geprüft, ob nach einer Auswertung des Gesamt-Entfernungsbilds ein unzulässiger Objekteingriff erkannt wird. Diese Auswertung ist anhand der wesentlich genaueren Entfernungsdaten des Gesamt-Entfernungsbilds entsprechend zuverlässiger möglich.

Erkennt der Sensor 10 anhand des Unterschreitens des Gesamt-Verlässlichkeitswerts eine Fehlfunktion oder unzulässig schlechte Sichtbedingungen in einem kritischen Bereich oder für den gesamten Raumbereich 14 oder erkennt er einen unzulässigen Objekteingriff, so wird in einem Schritt S10 über den Schaltausgang 26 ein Warnsignal ausgegeben oder eine Gefahrenquelle abgesichert. Andernfalls wird der gesamte beschriebene Überwachungszyklus zur Fortsetzung der Überwachung des Raumbereichs 14 wiederholt.

Die Erfindung umfasst über die eingehend beschriebenen Ausführungsformen mit zwei unterschiedlichen Aufnahmebedingungen auch solche, bei denen durch Dynamisierung drei oder mehr unterschiedliche Aufnahmebedingungen geschaffen und aus allen oder einigen der unter den Aufnahmebedingungen entstehenden Bildern oder Zusammensetzungen dieser Bilder wie Übereinanderschieben, Differenz und weiteren Verknüpfungen ein Gesamt-Entfernungsbild berechnet wird.

## Patentansprüche

1. Vorrichtung (10) zur Überwachung eines Raumbereichs (14) mit mindestens zwei Bildsensoren (12, 12') und einer angeschlossenen Steuerung (22), welche dafür ausgebildet ist, mittels der Bildsensoren (12, 12,') ein erstes Bildpaar aufzunehmen und zu einem dreidimensionalen ersten Einzel-Entfernungsbild des Raumbereichs (14) zu verrechnen, wobei eine Dynamisierungseinrichtung (18) vorgesehen ist, welche die Aufnahmebedingungen des Raumbereichs (14) und/oder der Bildsensoren (12, 12,') verändern kann, und wobei die Steuerung (22) dafür ausgebildet ist, mittels der Bildsensoren (12, 12') ein erstes Bildpaar und bei gegenüber dem ersten Bildpaar durch die Dynamisierungseinrichtung (18) veränderten Aufnahmebedingungen ein zweites Bildpaar aufzunehmen, **dadurch gekennzeichnet, dass** die Steuerung (22) weiterhin dafür ausgebildet ist, das erste Bildpaar zu einem dreidimensionalen ersten Einzel-Entfernungsbild und das zweite Bildpaar zu einem dreidimensionalen zweiten Einzel-Entfernungsbild des Raumbereichs (14) zu verrechnen und aus dem ersten Einzel-Entfernungsbild und dem zweiten Einzel-Entfernungsbild ein dreidimensionales Abbild des Raumbereichs (14) als Gesamt-Entfernungsbild zu ermitteln.

2. Vorrichtung (10) nach Anspruch 1, **dadurch gekennzeichnet, dass** die Dynamisierungseinrichtung (18) eine Beleuchtungseinrichtung, insbesondere zur Ausleuchtung des Raumbereichs (14) mit einem selbstunähnlichen oder einem regelmäßigen Muster oder eine Bewegungseinrichtung zur Veränderung der Position oder des Basisabstands der Bildsensoren (12, 12') ist.

3. Vorrichtung (10) nach Anspruch 1 oder 2, **dadurch gekennzeichnet, dass** die Steuerung (22) dafür ausgebildet ist, aus dem ersten und dem zweiten Bildpaar ein Differenz-Bildpaar und aus dem Differenz-Bildpaar insbesondere mittels Bestimmung von Differenzvektoren ein drittes Einzel-Entfernungsbild zu erzeugen und das Gesamt-Entfernungsbild unter Einbeziehung des dritten Einzel-Entfernungsbilds zu ermitteln.

4. Vorrichtung (10) nach einem der vorhergehenden Ansprüchen, **dadurch gekennzeichnet, dass** die Steuerung (22) dafür ausgebildet ist, bei der Verrechnung eines Bildpaares zu einem Einzel-Entfernungsbild ein Verlässlichkeitsmaß für die Entfernungen zu berechnen und das Gesamt-Entfernungsbild als mit dem Verlässlichkeitsmaß gewichtetes Mittel der Einzel-Entfernungsbilder zu ermitteln.

5. Vorrichtung (10) nach einem der vorhergehenden Ansprüche, **dadurch gekennzeichnet, dass** die Steuerung (22) dafür ausgebildet ist, jedes Bildpaar jeweils mit dem gleichen Stereoskopiealgorithmus zu dem dreidimensionalen Einzel-Entfernungsbild zu verrechnen.

6. Vorrichtung (10) nach einem der vorhergehenden Ansprüche, **dadurch gekennzeichnet, dass** eine Warn- oder Absicherungseinrichtung (26) vorgesehen und die Steuerung (22) dafür ausgebildet ist, bei Erkennen eines unzulässigen Objekteingriffs (24) oder bei Unterschreiten eines Gesamt-Verlässlichkeitswerts des Gesamt-Entfernungsbildes als Ganzes oder Bereichen davon mittels der Warn- oder Absicherungseinrichtung (26) eine Warnung auszugeben oder eine Gefahrenquelle abzusichern.

7. Vorrichtung (10) nach Anspruch 6, **dadurch gekennzeichnet, dass** bei Überschreitung eines vorgegebenen Mindestwerts der Abweichung von Entfernungen in verschiedenen Einzel-Entfernungsbildern untereinander der Gesamt-Verlässlichkeitswert Null beträgt.

8. Vorrichtung (10) nach Anspruch 6 oder 7, **dadurch gekennzeichnet, dass** die Steuerung (22) dafür ausgebildet ist, die Einzel-Entfernungsbilder und/oder das Gesamt-Entfernungsbild mittels eines räumlichen Filters zu glätten oder die Warn- oder Absicherungseinrichtung (26) nur dann zu aktivieren, wenn das Erkennen eines unzulässigen Objekteingriffs (24) oder die Unterschreitung des Gesamt-Verlässlichkeitswerts länger andauert als eine vorgegebene Mindestzeit.

9. Verfahren zur Überwachung eines Raumbereichs (14), bei dem mittels mindestens zweier Bildsensoren (12, 12') Bildpaare aufgenommen und zu dreidimensionalen Entfernungsbildern des Raumbereichs (14) verrechnet werden, wobei mittels der Bildsensoren (12, 12') ein erstes Bildpaar und ein zweites Bildpaar bei gegenüber dem ersten Bildpaar veränderten Aufnahmebedingungen aufgenommen wird, **dadurch gekennzeichnet, dass** das erste Bildpaar zu einem dreidimensionalen ersten Einzel-Entfernungsbild und das zweite Bildpaar zu einem dreidimensionalen zweiten Einzel-Entfernungsbild des Raumbereichs (14) verrechnet und aus dem ersten Einzel-Entfernungsbild und dem zweiten Einzel-Entfernungsbild ein dreidimensionales Abbild des Raumbereichs (14) als Gesamt-Entfernungsbild ermittelt wird.

10. Verfahren nach Anspruch 9, **dadurch gekennzeichnet, dass** Aufnahmebedingungen durch Variation der Beleuchtung (18) des Raumbereichs, insbesondere durch Ausleuchten mit einem regelmäßigen oder einem selbstunähnlichen Muster, Variation der Aufnahmeposition oder der Perspektive der Bildsensoren (12, 12') oder Variation des Basisabstands der Bildsensoren (12, 12') untereinander verändert werden.

11. Verfahren nach Anspruch 9 oder 10, **dadurch gekennzeichnet, dass** aus dem ersten und dem zweiten Bildpaar ein Differenz-Bildpaar und aus dem Differenz-Bildpaar insbesondere mittels Bestimmung von Differenzvektoren ein drittes Einzel-Entfernungsbild erzeugt und das Gesamt-Entfernungsbild unter Einbeziehung des dritten Einzel-Entfernungsbilds ermittelt wird.

12. Verfahren nach einem der Ansprüche 9 bis 11, **dadurch gekennzeichnet, dass** bei der Verrechnung eines Bildpaares zu einem Einzel-Entfernungsbild ein Verlässlichkeitsmaß für die Entfernungen berechnet und das Gesamt-Entfernungsbild als mit dem Verlässlichkeitsmaß gewichtetes Mittel der Einzel-Entfernungsbilder ermittelt wird.

13. Verfahren nach einem der Ansprüche 9 bis 12, **dadurch gekennzeichnet, dass** jedes Bildpaar jeweils mit dem gleichen Stereoskopiealgorithmus zu dem dreidimensionalen Einzel-Entfernungsbild verrechnet wird.

14. Verfahren nach einem der Ansprüche 9 bis 13, **dadurch gekennzeichnet, dass** bei Erkennen eines unzulässigen Objekteingriffs (24) oder bei Unterschreiten eines Gesamt-Verlässlichkeitswerts des Gesamt-Entfernungsbildes als Ganzes oder Bereichen davon eine Warnung ausgegeben oder eine Gefahrenquelle abgesichert wird.

15. Verfahren nach Anspruch 14, **dadurch gekennzeichnet, dass** die Einzel-Entfernungsbilder und/oder das Gesamt-Entfernungsbild mittels eines räumlichen Filters geglättet oder eine Warnung bzw. Absicherung nur dann vorgenommen wird, wenn das Erkennen eines unzulässigen Objekteingriffs (24) oder die Unterschreitung des Gesamt-Verlässlichkeitswerts länger andauert als eine vorgegebene Mindestzeit.

## Claims

1. An apparatus (10) for the monitoring of a spatial zone (14) having at least two image sensors (12, 12') and a connected control (22) which is made to take a first image pair by means of the image sensors (12, 12') and to consolidate said first image pair to form a three-dimensional first individual distance image of the spatial zone (14), wherein a dynamisation device (18) is provided which can change the taking conditions of the spatial zone (14) and/or of the image sensors (12, 12'), and wherein the control (22) is made to take a first image pair by means of the image sensors (12, 12') and to take a second image pair with taking conditions changed with respect to the first image pair by the dynamisation device (18), **characterised in that** the control (22) is further made to consolidate the first image pair to form a three-dimensional first individual distance image and to consolidate the second image pair to form a three-dimensional second individual distance image of the spatial zone (14) and to determine an aggregate distance image from the first individual distance image and from the second individual image.

2. An apparatus (10) in accordance with claim 1, **characterised in that** the dynamisation device (18) is a lighting device, in particular for the illumination of the spatial zone (14) by an irregular pattern or a regular pattern, or a movement device for the changing of the position or of the base spacing of the image sensors (12, 12').

3. An apparatus (10) in accordance with claim 1 or claim 2, **characterised in that** the control (22) is made to generate a difference image pair from the first and second image pairs and a third individual distance image from the difference image pair, in particular by means of difference vectors, and to determine the aggregate distance image while taking account of the third individual distance image.

4. An apparatus (10) in accordance with any one of the preceding claims, **characterised in that** the control (22) is made to calculate a reliability measure for the distances on the consolidation of an image pair to form an individual distance image and to determine the aggregate distance image as an average of the individual distance images weighted with the reliability measure.

5. An apparatus (10) in accordance with any one of the preceding claims, **characterised in that** the control (22) is made to consolidate each image pair in each case using the same stereoscopic algorithm to form the three-dimensional individual distance image.

6. An apparatus (10) in accordance with any one of the preceding claims, **characterised in that** a warning or securing device (26) is provided and the control (22) is made to output a warning or to secure a source of danger by means of the warning or securing device (26) on recognition of an unauthorised object intrusion (24) or on the falling below of an aggregate reliability value of the aggregate distance image as a whole or of regions thereof.

7. An apparatus (10) in accordance with claim 6, **characterised in that** the aggregate reliability value amounts to zero when a minimum value of the deviation of distances in different individual distance images relative to one another falls below a preset minimum value.

8. An apparatus (10) in accordance with claim 6 or claim 7, **characterised in that** the control (22) is made to smooth the image distance images and/or the aggregate distance image by means of a spatial filter or only to activate the warning or securing device (26) when the recognition of an unauthorised object intrusion (24) or the falling below of the aggregate reliability value lasts longer than a preset minimum time.

9. A method for the monitoring of a spatial zone (14), wherein image pairs are taken by means of at least two image sensors (12, 12'), said image pairs being consolidated to form three-dimensional individual distance images of the spatial zone (14), wherein a first image pair is taken and a second image pair is taken with taking conditions changed with respect to the first image pair **characterised in that** the first image pair is consolidated to form a three-dimensional first individual distance image of the spatial zone (14) and the second image pair is consolidated to form a three-dimensional second individual image of the spatial zone and an aggregate distance image is determined from the first individual distance image and the second individual distance image.

10. A method in accordance with claim 9, **characterised in that** taking conditions are changed by variation of the lighting (18) of the spatial zone, in particular by illumination using a regular or an irregular pattern, by variation of the taking position or of the perspective of the image sensors (12, 12') or by variation of the base spacing of the image sensors (12, 12') between one another.

11. A method in accordance with claim 9 or claim 10, **characterised in that** a difference image pair is generated from the first and second image pairs and a third individual distance image is generated from the difference image pair by means of determining difference vectors and the aggregate distance image is determined while taking account of the third individual distance image.

12. A method in accordance with any one of the claims 9 to 11, **characterised in that** a reliability measure for the distances is calculated on the consolidation of an image pair to form an individual distance image and the aggregate distance image is determined as an average of the individual distance images weighted with the reliability measure.

13. A method in accordance with any one of the claims 9 to 12, **characterised in that** each image pair is respectively consolidated using the same stereoscopic algorithm to form the three-dimensional individual distance image.

14. A method in accordance with any one of the claims 9 to 13, **characterised in that** a warning is output or a source of danger is secured on recognition of an unauthorised object intrusion (24) or on a falling below of an aggregate reliability value of the aggregate distance image as a whole or of regions thereof.

15. A method in accordance with claim 14, **characterised in that** the individual distance images and/or the aggregate distance image is smoothed by means of a spatial filter or a warning or a securing is only carried out when the recognition of an unauthorised object intrusion (24) or the falling below of the aggregate reliability value lasts longer than a preset minimum time.

## Revendications

1. Dispositif (10) pour contrôler une zone d'espace (14) avec au moins deux capteurs d'image (12, 12') et une commande (22) raccordée, qui est conçu pour enregistrer une première paire d'images au moyen des capteurs d'images (12, 12') et pour la convertir en une première image de distance individuelle en trois dimensions de la zone d'espace (14), un dispositif de dynamisation (18) étant prévu, lequel peut modifier les conditions d'enregistrement de la zone d'espace (14) et/ou des capteurs d'image (12, 12'), et la commande (22) étant conçue pour enregistrer au moyen des capteurs d'image (12, 12') une première paire d'images et, dans le cas de conditions d'enregistrement modifiées par rapport à la première paire d'images par le dispositif de dynamisation (18), une seconde paire d'images, **caractérisé en ce que** la commande (22) est conçue également pour convertir la première paire d'images en une première image de distance individuelle en trois dimensions et la seconde paire d'images en une seconde paire d'images en une seconde distance individuelle en trois dimensions de la zone d'espace (14) et pour déterminer à partir de la première image de distance individuelle et de la seconde image de distance individuelle une représentation en trois dimensions de la zone d'espace (14) comme image de distance globale.

2. Dispositif (10) selon la revendication 1, **caractérisé en ce que** le dispositif de dynamisation (18) est un dispositif d'éclairage, en particulier pour l'éclairage de la zone d'espace (14) avec un modèle dissemblable de lui-même ou un modèle régulier ou un dispositif de déplacement pour la modification de la position ou de l'espacement de base des capteurs d'image (12, 12').

3. Dispositif (10) selon la revendication 1 ou 2, **caractérisé en ce que** la commande (22) est conçue pour générer une paire d'images de différence à partir de la première et de la seconde paire d'images et une troisième image de distance individuelle à partir de la paire d'images de différence, en particulier par détermination de vecteurs de différence, et pour déterminer l'image de distance globale en intégrant la troisième image de distance individuelle.

4. Dispositif (10) selon l'une quelconque des revendications précédentes, **caractérisé en ce que** la commande (22) est conçue pour calculer une cote de fiabilité pour les distances lors de la conversion d'une paire d'images en une image de distance individuelle et déterminer l'image de distance globale comme moyen, pondéré avec la cote de fiabilité, des images de distance individuelles.

5. Dispositif (10) selon l'une quelconque des revendications précédentes, **caractérisé en ce que** la commande (22) est conçue pour convertir chaque paire d'images à chaque fois avec le même algorithme de stéréoscopie en une image de distance individuelle en trois dimensions.

6. Dispositif (10) selon l'une quelconque des revendications précédentes, **caractérisé en ce qu'**un dispositif d'avertissement ou de sécurisation (26) est prévu et la commande (22) est conçue pour délivrer un avertissement ou sécuriser une source de danger en cas de détection d'une intervention inacceptable sur l'objet (24) ou en cas de sous-dépassement d'une valeur de fiabilité globale de l'image de distance globale sous forme globale ou de zones de cet ensemble au moyen du dispositif d'avertissement ou de sécurisation (26).

7. Dispositif (10) selon la revendication 6, **caractérisé en ce que,** en cas de dépassement d'une valeur minimale prédéfinie de l'écart entre les distances dans différentes images de distance individuelles, la valeur de fiabilité globale est zéro.

8. Dispositif (10) selon la revendication 6 ou 7, **caractérisé en ce que en ce que** la commande (22) est conçue pour lisser les images de distance individuelles et/ou l'image de distance globale au moyen d'un filtre dans l'espace ou activer le dispositif d'avertissement ou de sécurisation (26) uniquement dans les cas où la détection d'une intervention inacceptable sur l'objet (24) ou le sous-dépassement de la valeur de fiabilité globale dure plus longtemps qu'un temps minimum prédéfini.

9. Procédé pour contrôler une zone d'espace (14), dans lequel des paires d'images sont enregistrées au moyen d'au moins deux capteurs d'images (12, 12') et sont converties en images de distance en trois dimensions de la zone d'espace (14), une première paire d'images et une seconde paire d'images étant enregistrées au moyen des capteurs d'images (12, 12') dans le cas de conditions d'enregistrement modifiées par rapport à la première paire d'images, **caractérisé en ce que** la première paires d'images est convertie en une première image de distance individuelle en trois dimensions et la seconde paire d'images en une seconde image de distance individuelle en trois dimensions de la zone d'espace (14) et une représentation en trois dimensions de la zone d'espace (14) sous forme d'image de distance globale est déterminée à partir de la première image de distance individuelle et de la seconde image de distance individuelle.

10. Procédé selon la revendication 9, **caractérisé en ce que** des conditions d'enregistrement sont modifiées par variation de l'éclairage (18) de la zone d'espace, en particulier par l'éclairage avec un modèle régulier ou un modèle dissemblable de lui-même, par variation de la position d'enregistrement ou la perspective des capteurs d'image (12, 12') ou par variation de la distance de base entre les capteurs d'images (12, 12').

11. Procédé selon la revendication 9 ou 10, **caractérisé en ce qu'**une paire d'images de différence est générée à partir de la première et de la seconde paire d'images et une troisième image de distance individuelle est générée à partir de la paire d'images de différence en particulier par détermination de vecteurs de différence et l'image de distance globale est déterminée en intégrant la troisième image de distance individuelle.

12. Procédé selon l'une quelconque des revendications 9 à 11, **caractérisé en ce que,** lors de la conversion d'une paire d'images en une image de distance individuelle, une cote de fiabilité pour les distances est calculée et l'image de distance globale est déterminée comme moyenne, pondérée avec la cote de fiabilité, des images de distance individuelles.

13. Procédé selon l'une quelconque des revendications 9 à 12, **caractérisé en ce que** chaque paire d'images est convertie à chaque fois avec le même algorithme de stéréoscopie pour former l'image de distance individuelle en trois dimensions.

14. Procédé selon l'une quelconque des revendications 9 à 13, **caractérisé en ce que,** en cas de détection ou d'intervention inacceptable sur l'objet (24) ou en cas de sous-dépassement d'une cote de fiabilité globale de l'image de distance globale en tant qu'ensemble ou que zones de cet ensemble, un avertissement est délivré et une source de danger est sécurisée.

15. Procédé selon la revendication 14, **caractérisé en ce que** les images de distance individuelles et/ou l'image de distance globale sont lissées au moyen d'un filtre dans l'espace ou un avertissement ou une sécurisation est effectué(s) uniquement dans les cas où la détection d'une intervention inacceptable sur l'objet (24) ou le sous-dépassement de la valeur de fiabilité globale dure plus longtemps qu'un temps minimum prédéfini.
